# EUROPÄISCHE PATENTSCHRIFT

(11) **EP 2 787 325 B1**
(45) Veröffentlichungstag und Bekanntmachung des Hinweises auf die Patenterteilung: **31.01.2018**
(21) Anmeldenummer: 14000444.1
(22) Anmeldetag: 07.02.2014
(51) Int. Cl.: G01C 21/34, G08G 1/0967, G08G 1/0968

(54) **Anordnung zur Warnung vor und/oder zur Berücksichtigung von nutzfahrzeugrelevanten Fahreinschränkungen**
Assembly for providing advance warning of and/or observation of travel restrictions that are relevant to commercial vehicles
Système permettant d'alerter sur et/ou de prendre en compte des restrictions de conduite pertinentes pour des véhicules utilitaires

(30) Priorität: 04.04.2013 DE 102013005828
(43) Veröffentlichungstag der Anmeldung: 08.10.2014
(73) Patentinhaber: MAN Truck & Bus AG, 80995 München (DE)
(72) Erfinder: Römersperger, Xaver, 84034 Landshut (DE); Dörner, Karlheinz, 85757 Karlsfeld (DE); Schwertberger, Walter, 82278 Althegnenberg (DE); Völl, Sebastian, 85221 Dachau (DE); Kraus, Sven, 82140 Olching (DE); Echtler, Johannes, 80686 München (DE)
(74) Vertreter: v. Bezold & Partner Patentanwälte - PartG mbB

(56) Entgegenhaltungen:
- EP-A1- 1 832 843
- DE-A1- 10 053 873
- DE-A1- 19 944 938
- DE-A1-102012 024 621
- US-A1- 2007 138 347

## Beschreibung

Die Erfindung betrifft eine Vorrichtung zum Einbau in ein Nutzfahrzeug und vorzugsweise zum Warnen vor und/oder zum Berücksichtigen einer nutzfahrzeugrelevanten Fahreinschränkung. Die Erfindung umfasst zudem eine Einrichtung zum Platzieren an oder zumindest benachbart zu einer Verkehrsinfrastruktur und vorzugsweise zum Warnen vor und/oder Kommunizieren einer nutzfahrzeugrelevanten Fahreinschränkung. Die Erfindung umfasst zudem zugehörige Betriebsverfahren und ein System mit einer Vorrichtung und einer Einrichtung wie zuvor erwähnt. Aus der US 2007/138347 A1 ist eine Vorrichtung zum Einbau in ein Nutzfahrzeug bekannt. Fahrer von Nutzfahrzeugen müssen im Straßenverkehr neben der eigentlichen Fahraufgabe auch der Routenwahl besondere Aufmerksamkeit schenken. Schwere Nutzfahrzeuge z.B. haben eine zulässige Gesamthöhe von bis zu 4 m und eine zulässige Gesamtmasse von bis zu 40 t bzw. 44 t im kombinierten Verkehr. Viele Verkehrsinfrastrukturen, insbesondere Brücken oder Tunnel, haben in der Regel Gewichts- und/oder Höhenbegrenzungen, die unter den genannten Werten liegen. Übersieht der Fahrer Warn- oder Hinweisschilder oder sind solche Schilder schlichtweg nicht vorhanden, fährt er ungehindert bis zum Hindernis vor und kann es nicht passieren. Ein zeitintensiver und gefährlicher Rangiervorgang wird erforderlich. Am Markt existieren derzeit zwar verschiedene Navigationssysteme mit nutzfahrzeugspezifischer Datenbasis, die nutzfahrzeugrelevante Verkehrsinfrastrukturen miteinbeziehen. Die Datenbasis ist allerdings meist nicht vollständig oder auf dem aktuellen Stand, so dass es nach wie vor passiert, dass Fahrer von Nutzfahrzeugen trotz solcher Navigationssysteme mit unausweichlichen Fahreinschränkungen konfrontiert werden.

Eine Aufgabe der Erfindung ist es, eine Möglichkeit zu schaffen, mit der zuverlässig verhindert werden kann, dass Fahrer von Nutzfahrzeugen mit unausweichlichen Fahreinschränkungen konfrontiert werden.

Diese Aufgabe kann mit den Merkmalen der unabhängigen Ansprüche gelöst werden. Vorteilhafte Weiterbildungen der Erfindung können den Unteransprüchen und der folgenden Beschreibung entnommen werden.

Die Erfindung schafft eine Vorrichtung zum Einbau in ein Nutzfahrzeug (z.B. ein Omnibus oder ein Lastkraftwagen) und vorzugsweise zum Warnen vor und/oder zum Berücksichtigen einer durch eine Verkehrsinfrastruktur zumindest potentiell erzeugten Fahreinschränkung (z.B. ein Fahrverbot, ein Fahrhindernis, eine Fahrbeschränkung, etc.). Die Vorrichtung umfasst eine Empfangseinheit zum insbesondere drahtlosen Empfangen einer nutzfahrzeugrelevanten, die Verkehrsinfrastruktur zumindest mittelbar betreffenden Information, die vorzugsweise von einer an der Verkehrsinfrastruktur (z.B. einer Brücke, einer Straße, einem Tunnel, einer Baustellenstrecke, etc.) oder zumindest benachbart dazu angeordneten Einrichtung versendet worden ist. Die Vorrichtung umfasst ferner eine Bereitstellungseinheit (z.B. eine Anzeige- und/oder Sprachausgabeeinheit) zum Bereitstellen der nutzfahrzeugrelevanten Information und/oder einer darauf basierenden Information an den Fahrer des Nutzfahrzeugs. Erfindungsgemäß umfasst die Vorrichtung eine Ermittlungseinheit (z.B. Recheneinheit, Prozessor, Steuergerät, etc.), die in Abhängigkeit der empfangenen nutzfahrzeugrelevanten Information und zumindest einer nutzfahrzeugspezifischen Information eine zumindest potentielle Fahreinschränkung für das Nutzfahrzeug ermittelt. Alternativ oder ergänzend kann die Ermittlungseinheit eine Fahrempfehlung für das Nutzfahrzeug ermitteln, zweckmäßig dann, falls ein Passieren der Verkehrsinfrastruktur für das Nutzfahrzeug nicht möglich (z.B. verboten) ist und/oder zuvor mittels der Ermittlungseinheit tatsächlich eine Fahreinschränkung für das Nutzfahrzeug ermittelt wurde. Die Fahrempfehlung umfasst insbesondere einen Routenvorschlag zur Umfahrung der Verkehrsinfrastruktur.

Die Vorrichtung kann ferner eine Speichereinrichtung aufweisen, in der die zumindest eine nutzfahrzeugspezifische Information hinterlegt ist.

Die nutzfahrzeugspezifische Information kann z.B. das zulässige Nutzfahrzeuggesamtgewicht, das tatsächliche Nutzfahrzeuggesamtgewicht, die Nutzfahrzeughöhe, die Nutzfahrzeugbreite und/oder die Art der transportierten Ladung umfassen. Gemäß der Erfindung fließt die Ermittlung der Fahrempfehlung und/oder der zumindest potentiellen Fahreinschränkung eine prognostizierte Fahrtroute ein, um die Option der Umfahrung der Fahreinschränkung rechtzeitig gewährleisten zu können. Zu diesem Zweck kann die Vorrichtung z.B. mit einem Navigationssystem oder einem Fahrzeugsteuergerät zusammenarbeiten, wobei die prognostizierte Fahrtroute aus dem Navigationssystem oder dem Fahrzeugsteuergerät stammen kann. Erfindungsgemäß umfasst die prognostizierte Fahrtroute zumindest eine mittels einer oder mehrerer Erfassungseinheiten erfasste unmittelbare Fahrerhandlung. Die unmittelbare Fahrerhandlung umfasst ein Setzen einer Nutzfahrzeug-Blinkereinrichtung, eine Bewegung eines Nutzfahrzeug-Lenkrads und/oder eine Betätigung einer Nutzfahrzeug-Bremse. Die nutzfahrzeugrelevante Information kann außerdem eine zumindest potentielle Fahreinschränkung umfassen, z.B. die Art, die Position und/oder die räumliche Ausdehnung (z.B. Straßenname, etc.) der Fahreinschränkung. Die zumindest potentielle Fahreinschränkung kann zumindest eines von folgenden umfassen: Maximal zulässige Durchfahrtshöhe eines Tunnels, maximal zulässige Durchfahrtshöhe unter einer Brücke, maximal zulässige Fahrzeugbreite auf einer Straße, maximal zulässige Fahrzeugbreite auf einer Baustellenstrecke, maximal zulässige (Fahrzeug-) Masse auf einem Streckenabschnitt, eine Durchfahrtsbeschränkung für Gefahrguttransporte, eine Durchfahrtsbeschränkung für Transitverkehr, ein zeitspezifisches Fahrverbot (z.B. Feiertage, Ferienreisezeit, etc.), eine abgasspezifische Durchfahrtsbeschränkung, eine Sackgasse ohne Nutzfahrzeug-Wendemöglichkeit, etc.. Die nutzfahrtzeugrelevante Information kann natürlich auch z.B. die tatsächliche Fahrbahnbreite, die tatsächliche Durchfahrtshöhe, etc. umfassen, so dass der Fahrer des Nutzfahrzeugs selbst entscheiden kann, ob ein Passieren der Verkehrsinfrastruktur möglich oder erlaubt ist oder nicht.

Die nutzfahrzeugrelevante Information kann ferner einen konkreten Routenvorschlag zur Umfahrung der Verkehrsinfrastruktur umfassen, die zweckmäßig im Navigationssystem oder dem Fahrzeugsteuergerät des Nutzfahrzeugs verarbeitet werden kann. Es ist ebenso möglich, dass die nutzfahrzeugrelevante Information per se so konfiguriert ist, dass sie in die Routenplanung des Nutzfahrzeug-Navigationssystems oder des Fahrzeugsteuergeräts zur Umfahrung der Verkehrsinfrastruktur einfließen kann.

Es ist möglich, dass die nutzfahrzeugrelevante Information zusätzlich darüber informiert, für welche Nutzfahrzeug-Konfiguration (z. B. Nutzfahrzeuge mit zulässiger Gesamthöhe von bis zu 4 m, Nutzfahrzeuge mit einer zulässigen Gesamtmasse von bis zu 40 t oder 44 t, etc.) die nutzfahrzeugrelevante Information maßgebend ist und/oder für welche nicht, z.B. für welche Nutzfahrzeug-Konfiguration die zumindest potentielle Fahreinschränkung und/oder der Routenvorschlag zur Umfahrung der Verkehrsinfrastruktur relevant ist.

Die Erfindung betrifft zudem ein System mit einer Einrichtung zum Platzieren an oder zumindest benachbart zu einer Verkehrsinfrastruktur und z.B. zum Warnen vor und/oder zum Kommunizieren einer durch eine Verkehrinfrastruktur zumindest potentiell erzeugten Fahreinschränkung. Die Einrichtung umfasst eine Funktionseinheit (z.B. eine Ermittlungs-, insbesondere Recheneinheit und/oder eine Speichereinheit) zum Speichern und/oder Verarbeiten zumindest einer nutzfahrzeugrelevanten, die Verkehrsinfrastruktur zumindest mittelbar betreffenden Information, und eine Sendeeinheit zum insbesondere drahtlosen Senden der nutzfahrzeugrelevanten Information an ein oder mehrere Nutzfahrzeuge. Im Rahmen der Erfindung umfasst die Speichereinheit vorzugsweise auch z.B. einen Zwischenspeicher zum Zwischenspeichern einer nutzfahrzeugrelevanten, die Verkehrsinfrastruktur zumindest mittelbar betreffenden Information. Weitere erfindungsgemäße Merkmale der Einrichtung ergeben sich aus der entsprechenden Beschreibung der erfindungsgemäßen Vorrichtung.

Die Einrichtung kann z.B. eine Empfangseinheit aufweisen zum insbesondere drahtlosen Empfangen eines Steuerbefehls (z.B. eines Befehls zum Aktivieren oder Deaktivieren der Sendeeinheit), einer nutzfahrzeugrelevanten, die Verkehrsinfrastruktur betreffenden Information und/oder einer Aktualisierung einer nutzfahrzeugrelevanten, die Verkehrsinfrastruktur betreffenden Information. Die Einrichtung kann somit eine quasi bidirektionale Kommunikationseinheit darstellen. Die Empfangseinheit ermöglicht, dass die Einrichtung problemlos universell für verschiedene Verkehrsinfrastrukturen einsetzbar ist und/oder einfach aktualisierbar ist.

Die Erfindung betrifft ferner ein System mit einer Vorrichtung und einer Einrichtung wie hierin beschrieben. Zudem umfasst die Erfindung noch ein Nutzfahrzeug, vorzugsweise einen Lastkraftwagen oder einen Omnibus, mit einer Vorrichtung wie hierin beschrieben.

Zu erwähnen ist noch, dass vorzugsweise die zuvor erwähnte zumindest eine nutzfahrzeugrelevante Information sich zumindest mittelbar auf die Verkehrsinfrastruktur bezieht.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt ein Beispielszenario mit einem eine Vorrichtung und eine Einrichtung umfassenden System gemäß einer Ausführungsform der Erfindung und
- Figur 2: zeigt eine schematische Darstellung einer Vorrichtung und einer Einrichtung gemäß einer Ausführungsform der Erfindung.

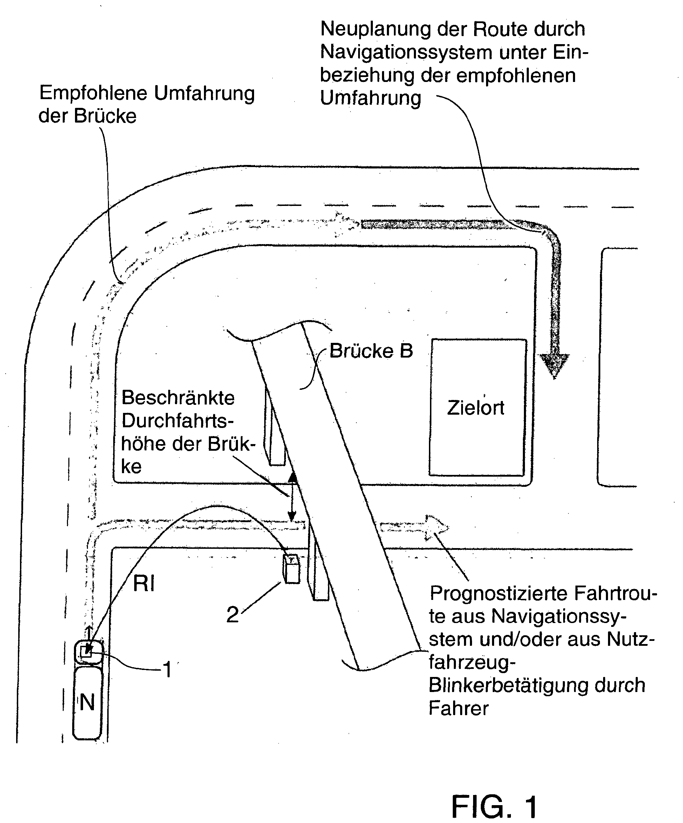

Figur 1 zeigt ein Nutzfahrzeug N, eine Verkehrsinfrastruktur B in Form einer Brücke mit einer maximal zulässigen Durchfahrtshöhe und einen Nutzfahrzeug-Zielort. Das Nutzfahrzeug N ist mit einem Navigationssystem ausgestattet, in das der Fahrer den Nutzfahrzeug-Zielort eingegeben hat. Die von dem Navigationssystem berechnete vorgeschlagene Fahrtroute führt unter der Brücke B hindurch. Das Nutzfahrzug N umfasst allerdings eine Höhe, die größer ist als die maximal zulässige Durchfahrtshöhe der Brücke B. Es besteht somit die Gefahr, dass der Fahrer des Nutzfahrzeugs N der vorgeschlagenen Fahrtroute folgt, z.B. weil ein ggf. vorhandenes Hinweisschild übersehen worden ist, und unmittelbar vor der Brücke B feststellt, dass ein Passieren unter der Brücke B hindurch nicht möglich ist, weshalb ein zeitaufwendiger und gefährlicher Rangiervorgang erforderlich werden würde. Um diese Gefahr zu vermeiden, weist das Nutzfahrzeug N eine Vorrichtung 1 auf, während an oder zumindest benachbart zu der Brücke B eine Einrichtung 2 platziert ist.

Die Einrichtung 2 umfasst eine Funktionseinheit (z.B. eine Recheneinheit mit (Zwischen-) Speicher), die dazu dient, eine nutzfahrzeugrelevante, die Brücke B betreffende Information RI zumindest zwischenzuspeichern und zu verarbeiten, und eine Sendeeinheit zum drahtlosen Senden der nutzfahrzeugrelevanten Information RI an Nutzfahrzeuge in Empfangsreichweite. In dem in Figur 1 gezeigten Beispielszenario umfasst die nutzfahrzeugrelevante Information RI die zuvor erwähnte maximal zulässige Durchfahrtshöhe der Brücke B. In Abhängigkeit der Verkehrsinfrastruktur, z.B. Tunnels, Brücken, Baustellenstrecken, innerstädtische oder innerörtliche Zonen, Fußgängerzonen, Naturschutzgebiete, etc. kann die nutzfahrzeugrelevante Information IR z.B. auch eine maximal zulässige Fahrzeugbreite, eine Durchfahrtsbeschränkung z.B. für Gefahrguttransporte oder Transitverkehr, ein zeitspezifisches Fahrverbot, eine abgasspezifische Durchfahrtsbeschränkung, eine Sackgasse ohne Nutzfahrzeug-Wendemöglichkeit, etc. umfassen.

Die Vorrichtung 1 umfasst eine Empfangseinheit zum drahtlosen Empfangen der nutzfahrzeugrelevanten Information RI, die von der Einrichtung 2 gesendet wurde, und eine Bereitstellungseinheit zum Bereitstellen der nutzfahrzeugrelevanten Information RI oder zumindest einer darauf basierenden Information an den Fahrer des Nutzfahrzeugs N. Die Bereitstellungseinheit kann eine Anzeigeeinheit, z.B. ein ohnehin vorhandenes Display des Navigationssystems, oder ein Lautsprecher des Nutzfahrzeugs N sein.

Die Vorrichtung 1 ist mit einer Speichereinrichtung ausgestattet, in der nutzfahrzeugspezifische Informationen hinterlegt sind, z.B. das zulässige bzw. tatsächliche Nutzfahrzeuggesamtgewicht, die Nutzfahrzeughöhe, die Nutzfahrzeugbreite, die Art der transportierten Ladung, etc..

Die Vorrichtung 1 umfasst eine Ermittlungseinheit (z.B. Recheneinheit, Steuergerät, etc.), die nun gezielt in Abhängigkeit der nutzfahrzeugspezifischen Information, der empfangenen nutzfahrzeugrelevanten Information RI und der prognostizierten Fahrtroute des Nutzfahrzeugs N ermitteln kann, ob eine Fahreinschränkung (z.B. ein Verbot, eine Fahrbeschränkung, etc.) für das Nutzfahrzeug N potentiell existiert oder bevorsteht. Falls ja, wie im dargestellten Beispielszenario der Figur 1, kann zugleich eine Fahrempfehlung zur Umfahrung der Brücke B ermittelt werden und über die Bereitstellungseinheit dem Fahrer des Nutzfahrzeugs N kommuniziert werden. Durch die Berücksichtigung der prognostizierten Fahrtroute kann die Möglichkeit zur Umfahrung der Fahreinschränkung frühzeitig und vor allem rechtzeitig gewährleistet werden. Die prognostizierte Fahrtroute stammt aus dem Navigationssystem des Nutzfahrzeugs N oder einem Fahrzeugsteuergerät. Sie kann alternativ oder ergänzend unmittelbare Fahrerhandlungen umfassen, die mittels einer oder mehrerer Erfassungseinheiten, z.B. Sensoren erfasst werden können. Die unmittelbaren Fahrerhandlungen umfassen insbesondere ein Setzen der Nutzfahrzeug-Blinkereinrichtung zur Fahrtrichtungsänderungsanzeige, eine Nutzfahrzeug-Lenkradbewegung und/oder eine Bremsbetätigung.

Die Vorrichtung 1 arbeitet so mit dem Navigationssystem oder einem zusätzlichen Ausgabegerät zusammen, dass zur Bereitstellung der nutzfahrzeugrelevanten Information RI und der darauf basierenden Information an den Fahrer des Nutzfahrzeugs N das Display des Navigationssystems oder das Display eines zusätzlichen Ausgabegeräts und die herkömmlichen Lautsprecher des Nutzfahrzeugs N genutzt werden können.

Bei einer etwas einfacheren Ausführungsform der Erfindung kann die nutzfahrzeugrelevante Information RI auch nur einen bloßen Warnhinweis umfassen, der auf die potentielle Fahreinschränkung in Form der maximal zulässigen Durchfahrtshöhe der Brücke B hinweist, ohne dass eine Fahrtroutenneuberechnung zwingend erfolgen muss.

Die nutzfahrzeugrelevante Information RI kann ferner einen quasi vorgefertigten Routenvorschlag zur Umfahrung der Brücke B umfassen, der zweckmäßig die prognostizierte Fahrtroute des Navigationssystems oder des Fahrzeugsteuergeräts modifizieren kann.

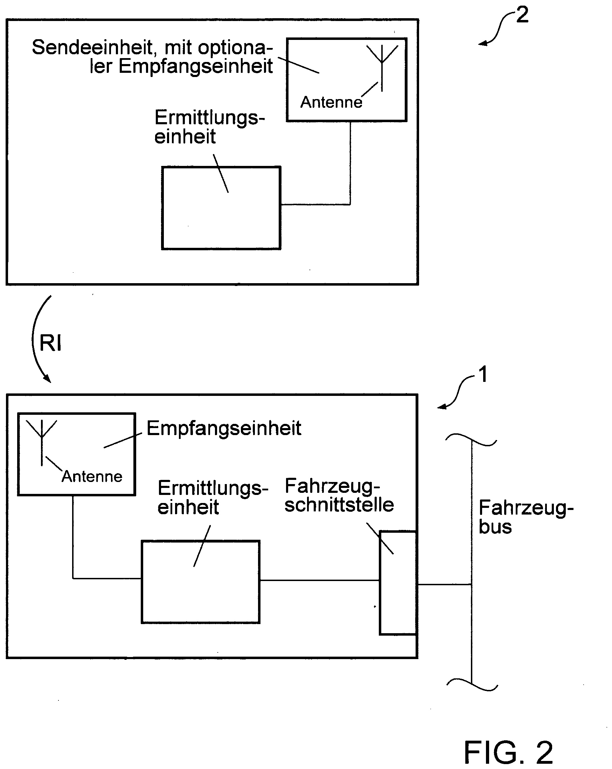

Figur 2 zeigt schematisch die Vorrichtung 1, insbesondere die Empfangseinheit, die mittels zumindest einer Antenne die nutzfahrzeugrelevante Information RI empfangen kann und die Ermittlungseinheit (z. B. Recheneinheit, Prozessor, Steuergerät, etc.). Die empfangenen Daten werden an die Ermittlungseinheit weitergeleitet. Die Ermittlungseinheit verarbeitet die Daten und bereitet sie dahingehend auf, dass sie über eine Schnittstelle an einen Fahrzeugdatenbus übergeben und an die Bereitstellungseinheit übermittelt werden können.

Figur 2 zeigt schematisch die Einrichtung 2, insbesondere die Sendeeinheit, eine optionale Empfangseinheit mit zumindest einer Antenne und die Funktionseinheit. Die zu sendenden Daten können prinzipiell über mehrere Wege an die Einrichtung 2 übertragen werden. Dies kann z.B. in Form eines einmaligen Flash-Prozesses geschehen oder auch zweckmäßig kontinuierlich z.B. von einer Leitzentrale aus erfolgen. Auf diese Weise kann z.B. zeitnah eine neue Umfahrung eines Hindernisses vorgeschlagen werden, wenn die ursprüngliche Umfahrung z.B. durch Stau blockiert ist. Die Daten können in der Funktionseinheit gespeichert oder zumindest zwischengespeichert, verarbeitet und an die Sendeeinheit weitergeleitet werden. Von dort aus werden die Daten kontinuierlich mit einer definierten Frequenz an die umliegenden Nutzfahrzeuge gesendet.

Die Erfindung ist nicht auf die oben beschriebenen bevorzugten Ausführungsformen beschränkt. Vielmehr ist eine Vielzahl von Varianten und Abwandlungen möglich, ohne den Schutzbereich der angefügten Ansprüche zu verlassen.

## Patentansprüche

1. Vorrichtung (1) zum Einbau in ein Nutzfahrzeug (N) und zum Warnen vor und/oder zum Berücksichtigen einer durch eine Verkehrinfrastruktur (B) zumindest potentiell erzeugten Fahreinschränkung, mit:
- einer Empfangseinheit zum Empfangen zumindest einer nutzfahrzeugrelevanten, die Verkehrsinfrastruktur (B) betreffenden Information (RI),
- einer Bereitstellungseinheit zum Bereitstellen der zumindest einen nutzfahrzeugrelevanten Information (RI) und/oder zumindest einer darauf basierenden Information an den Fahrer des Nutzfahrzeugs (N), und
- einer Ermittlungseinheit, die konfiguriert ist, um in Abhängigkeit der empfangenen nutzfahrzeugrelevanten Information (RI) und zumindest einer nutzfahrzeugspezifischen Information zu ermitteln, ob eine Fahreinschränkung für das Nutzfahrzeug (N) existiert oder bevorsteht, und/oder eine Fahrempfehlung für das Nutzfahrzeug (N) zu ermitteln, vorzugsweise, falls ein Passieren der Verkehrsinfrastruktur (B) für das Nutzfahrzeug (N) nicht möglich ist und/oder tatsächlich eine Fahreinschränkung für das Nutzfahrzeug (N) ermittelt wird,
**dadurch gekennzeichnet, dass**
- die Ermittlung in Abhängigkeit einer prognostizierten Fahrtroute für das Nutzfahrzeug (N) erfolgt, wobei die prognostizierte Fahrtroute zumindest eine mittels einer oder mehrerer Erfassungseinheiten erfasste unmittelbare Fahrerhandlung umfasst und die zumindest eine unmittelbare Fahrerhandlung ein Setzen einer Nutzfahrzeug-Blinkereinrichtung, eine Drehbewegung eines Nutzfahrzeugs-Lenkrads und/oder eine Betätigung einer Nutzfahrzeug-Bremse umfasst.

2. Vorrichtung (1) nach Anspruch 1, mit einer Speichereinrichtung, in der die zumindest eine nutzfahrzeugspezifische Information hinterlegt ist.

3. Vorrichtung (1) nach Anspruch 1 oder 2, wobei die zumindest eine nutzfahrzeugspezifische Information das zulässige Nutzfahrzeuggesamtgewicht, das tatsächliche Nutzfahrzeuggesamtgewicht, die Nutzfahrzeughöhe, die Nutzfahrzeugbreite und/oder die Art der transportierten Ladung umfasst.

4. Vorrichtung (1) nach einem der vorhergehenden Ansprüche, wobei die prognostizierte Fahrtroute von einem Navigationssystem oder einem Fahrzeugsteuergerät stammt.

5. Vorrichtung (1) nach einem der vorhergehenden Ansprüche, wobei die zumindest eine nutzfahrzeugrelevante Information (RI) einen Routenvorschlag zur Umfahrung der Verkehrsinfrastruktur (B) umfasst.

6. Vorrichtung (1) nach einem der vorhergehenden Ansprüche, mit einem Navigationssystem oder einem Fahrzeugsteuergerät, das konfiguriert ist, um die zumindest eine nutzfahrzeugrelevante Information (RI) in seiner Routenplanung zur Umfahrung der Verkehrsinfrastruktur (B) zu berücksichtigten.

7. Vorrichtung (1) nach einem der vorhergehenden Ansprüche, wobei die zumindest eine nutzfahrzeugrelevante Information (RI) eine zumindest potentielle Fahreinschränkung für das Nutzfahrzeug (N) umfasst, vorzugsweise die Art und/oder die Position einer Fahreinschränkung.

8. Vorrichtung (1) nach Anspruch 7, wobei die potentielle Fahreinschränkung zumindest eines von Folgenden umfasst:
- maximal zulässige Durchfahrtshöhe eines Tunnels oder einer Brücke,
- maximal zulässige Fahrzeugbreite auf einer Straße oder Baustellenstrecke,
- eine Durchfahrtsbeschränkung für Gefahrguttransporte oder Transitverkehr,
- ein zeitspezifisches Fahrverbot,
- eine abgasspezifische Durchfahrtsbeschränkung,
- eine Sackgasse ohne Nutzfahrzeug-Wendemöglichkeit,
- maximal zulässige Gesamtmasse und/oder tatsächliche Fahrzeugmasse auf einem Streckenabschnitt.

9. Vorrichtung (1) nach einem der vorhergehenden Ansprüche, wobei die zumindest eine nutzfahrzeugrelevante Information (RI) zusätzlich darüber informiert, für welche Nutzfahrzeug-Konfiguration sie maßgebend ist und/oder für welche nicht.

10. System, mit:
- einer Vorrichtung (1) nach einem der vorhergehenden Ansprüche und
- einer Einrichtung (2) zum Platzieren an oder zumindest benachbart zu einer Verkehrsinfrastruktur (B) und vorzugsweise zum Warnen vor und/oder zum Kommunizieren einer durch die Verkehrinfrastruktur (B) zumindest potentiell erzeugten Fahreinschränkung, mit:
- einer Funktionseinheit zum Speichern und/oder Verarbeiten zumindest einer nutzfahrzeugrelevanten, die Verkehrsinfrastruktur (B) betreffenden Information (RI), und
- einer Sendeeinheit zum Senden der zumindest einen nutzfahrzeugrelevanten Information (RI) an ein oder mehrere Nutzfahrzeuge (N).

11. System nach Anspruch 10, wobei die zumindest eine nutzfahrzeugrelevante Information (RI) einen Routenvorschlag zur Umfahrung der Verkehrsinfrastruktur (B) umfasst.

12. System nach Anspruch 10 oder 11, wobei die zumindest eine nutzfahrzeugrelevante Information (RI) eine potentielle Fahreinschränkung für ein Nutzfahrzeug (N) umfasst, vorzugsweise die Art und/oder die Position einer Fahreinschränkung.

13. System nach einem der Ansprüche 10 bis 12, wobei die potentielle Fahreinschränkung zumindest eines von Folgenden umfasst:
- maximal zulässige Durchfahrtshöhe eines Tunnels oder einer Brücke,
- maximal zulässige Fahrzeugbreite auf einer Straße oder Baustelienstrecke,
- eine Durchfahrtsbeschränkung für Gefahrguttransporte oder Transitverkehr,
- ein zeitspezifischen Fahrverbot,
- eine abgasspezifische Durchfahrtsbeschränkung,
- eine Sackgasse ohne Nutzfahrzeug-Wendemöglichkeit,
- maximal zulässige Gesamtmasse bzw. tatsächliche Fahrzeugmasse auf einem Streckenabschnitt.

14. System nach einem der Ansprüche 10 bis 13, wobei die Einrichtung (2) eine Empfangseinheit zum Empfangen eines Steuerbefehls, zumindest einer nutzfahrzeugrelevanten, die Verkehrsinfrastruktur (B) betreffenden Information (RI) und/oder einer Aktualisierung hiervon umfasst.

15. System nach einem der Ansprüche 10 bis 14, wobei die Sendeeinheit zum kontinuierlichen Senden ausgeführt ist, vorzugsweise mit definierter Frequenz.

16. Nutzfahrzeug (N), vorzugsweise Lastkraftwagen oder Omnibus, mit einer Vorrichtung (1) nach einem der Ansprüche 1 bis 9.

## Claims

1. A device (1) for installation in a utility vehicle (N) and for warning of and/or for consideration of a driving restriction at least potentially produced by a traffic infrastructure (B), having:
- a receiving unit for receiving at least one item of utility-vehicle-relevant information (RI) relating to the traffic infrastructure (B),
- a provision unit for providing the at least one item of utility-vehicle-relevant information (RI) and/or at least one item of information based thereon to the driver of the utility vehicle (N), and
- an ascertainment unit, which is configured to ascertain, as a function of the received item of utility-vehicle-relevant information (RI) and at least one item of utility-vehicle-specific information, whether a driving restriction exists or is imminent for the utility vehicle (N), and/or to ascertain a driving recommendation for the utility vehicle (N), preferably, if passing the traffic infrastructure (B) is not possible for the utility vehicle (N) and/or a driving restriction for the utility vehicle (N) is actually ascertained,
**characterized in that**
- the ascertainment is performed as a function of a predicted travel route for the utility vehicle (N), wherein the predicted travel route comprises at least one direct driver action detected by means of one or more detection units and the at least one direct driver action comprises setting a utility vehicle turn signal apparatus, a rotational movement of a utility vehicle steering wheel, and/or actuating a utility vehicle brake.

2. The device (1) according to Claim 1, having a storage apparatus in which the at least one item of utility-vehicle-specific information is stored.

3. The device (1) according to Claim 1 or 2, wherein the at least one item of utility-vehicle-specific information comprises the permissible utility vehicle total weight, the actual utility vehicle total weight, the utility vehicle height, the utility vehicle width, and/or the type of the transported load.

4. The device (1) according to any one of the preceding claims, wherein the predicted travel route originates from a navigation system or a vehicle control unit.

5. The device (1) according to any one of the preceding claims, wherein the at least one item of utility-vehicle-relevant information (RI) comprises a route suggestion for bypassing the traffic infrastructure (B).

6. The device (1) according to any one of the preceding claims, having a navigation system or a vehicle control unit, which is configured to consider the at least one item of utility-vehicle-relevant information (RI) in its route planning for bypassing the traffic infrastructure (B).

7. The device (1) according to any one of the preceding claims, wherein the at least one item of utility-vehicle-relevant information (RI) comprises an at least potential driving restriction for the utility vehicle (N), preferably the type and/or the position of a driving restriction.

8. The device (1) according to Claim 7, wherein the potential driving restriction comprises at least one of the following:
- maximum permissible clearance height of a tunnel or a bridge,
- maximum permissible vehicle width on a road or construction site route,
- a passage restriction for hazardous material transports or transit traffic,
- a time-specific driving prohibition,
- an exhaust-gas-specific passage restriction,
- a cul-de-sac without utility vehicle turning possibility,
- maximum permissible total mass and/or actual vehicle mass on a route section.

9. The device (1) according to any one of the preceding claims, wherein the at least one item of utility-vehicle-relevant information (RI) additionally informs about which utility vehicle configuration it is decisive for and/or which it is not.

10. A system having:
- a device (1) according to any one of the preceding claims and
- an apparatus (2) for placement on or at least adjacent to a traffic infrastructure (B) and preferably for warning of and/or for communication of a driving restriction at least potentially produced by the traffic infrastructure (B), having:
- a functional unit for storing and/or processing at least one item of utility-vehicle-relevant information (RI) relating to the traffic infrastructure (B), and
- a transmitting unit for transmitting the at least one item of utility-vehicle-relevant information (RI) to one or more utility vehicles (N).

11. The system according to Claim 10, wherein the at least one item of utility-vehicle-relevant information (RI) comprises a route suggestion for bypassing the traffic infrastructure (B).

12. The system according to Claim 10 or 11, wherein the at least one item of utility-vehicle-relevant information (RI) comprises a potential driving restriction for a utility vehicle (N), preferably the type and/or the position of a driving restriction.

13. The system according to any one of Claims 10 to 12, wherein the potential driving restriction comprises at least one of the following:
- maximum permissible clearance height of a tunnel or a bridge,
- maximum permissible vehicle width on a road or construction site route,
- a passage restriction for hazardous material transports or transit traffic,
- a time-specific driving prohibition,
- an exhaust-gas-specific passage restriction,
- a cul-de-sac without utility vehicle turning possibility,
- maximum permissible total mass or actual vehicle mass on a route section.

14. The system according to any one of Claims 10 to 13, wherein the apparatus (2) comprises a receiving unit for receiving a control command, at least one item of utility-vehicle-relevant information (RI) relating to the traffic infrastructure (B), and/or an update thereof.

15. The system according to any one of Claims 10 to 14, wherein the transmitting unit is embodied for continuous transmission, preferably at defined frequency.

16. A utility vehicle (N), preferably a truck or omnibus, having a device (1) according to any one of Claims 1 to 9.

## Revendications

1. Dispositif (1) destiné à être intégré dans un véhicule utilitaire (N) et à alerter sur et/ou à prendre en compte une restriction de conduite au moins potentiellement créée par une infrastructure routière (B), comportant :
- une unité de réception destinée à recevoir au moins une information (RI) pertinente pour le véhicule utilitaire et concernant l'infrastructure routière (B),
- une unité de fourniture destinée à fournir au conducteur du véhicule utilitaire (N) ladite au moins une information (RI) pertinente pour le véhicule utilitaire et/ou au moins une information basée sur celle-ci, et
- une unité de détermination qui est configurée pour déterminer, en fonction de l'information (RI) pertinente pour le véhicule utilitaire et d'au moins une information spécifique du véhicule utilitaire, si une restriction de conduite existe ou est imminente pour le véhicule utilitaire (N), et/ou pour déterminer une instruction de guidage pour le véhicule utilitaire (N), de préférence dans le cas où il n'est pas possible pour le véhicule utilitaire (N) d'emprunter l'infrastructure routière (B) et/ou dans le cas où une restriction de conduite est effectivement déterminée pour le véhicule utilitaire (N), **caractérisé en ce que**
- la détermination est effectuée en fonction d'un itinéraire de conduite prévu pour le véhicule utilitaire (N), dans lequel l'itinéraire de conduite prévu comprend au moins une manipulation de conduite immédiate détectée au moyen d'une ou plusieurs unités de détection et ladite au moins une manipulation de conduite immédiate comprend un actionnement d'un dispositif de clignotement du véhicule utilitaire, un mouvement de rotation d'un volant du véhicule utilitaire et/ou un actionnement d'un frein du véhicule utilitaire.

2. Dispositif (1) selon la revendication 1, comportant un dispositif à mémoire dans lequel est stockée ladite au moins une information spécifique du véhicule utilitaire.

3. Dispositif (1) selon la revendication 1 ou 2, dans lequel l'au moins une information liée au véhicule utilitaire comprend le poids total autorisé du véhicule utilitaire, le poids effectif du véhicule utilitaire, la hauteur du véhicule utilitaire, la largeur du véhicule utilitaire et/ou le type de la charge transportée.

4. Dispositif (1) selon l'une quelconque des revendications précédentes, dans lequel l'itinéraire prévu provient d'un système de navigation ou d'un appareil de commande de véhicule.

5. Dispositif (1) selon l'une quelconque des revendications précédentes, dans lequel l'au moins une information (RI) pertinente pour le véhicule utilitaire comprend une proposition d'itinéraire permettant le contournement de l'infrastructure routière (B).

6. Dispositif (1) selon l'une quelconque des revendications précédentes, comportant un système de navigation ou un appareil de commande de véhicule qui est configuré pour prendre en compte au moins une information (RI) pertinente pour le véhicule utilitaire lors de la planification de son itinéraire pour contourner l'infrastructure routière (B).

7. Dispositif (1) selon l'une quelconque des revendications précédentes, dans lequel ladite au moins une information (RI) pertinente pour le véhicule utilitaire comprend une restriction de conduite au moins potentielle pour le véhicule utilitaire (N), de préférence le type et/ou la position d'une restriction de conduite.

8. Dispositif (1) selon la revendication 7, dans lequel la restriction de conduite potentielle comprend au moins l'une des suivantes :
- une hauteur de passage maximale autorisée d'un tunnel ou d'un pont,
- une largeur de passage maximale autorisée dans une rue ou un chantier routier,
- une restriction de circulation pour le transport de substances dangereuses ou le transport en transit,
- une interdiction de circulation liée au temps,
- une restriction de circulation liée aux gaz d'échappement,
- une voie sans issue sans possibilité pour le véhicule utilitaire de faire demi-tour,
- une masse totale maximale autorisée et/ou une masse effective du véhicule sur un tronçon de route.

9. Dispositif (1) selon l'une quelconque des revendications précédentes, dans lequel ladite au moins une information (RI) pertinente pour le véhicule utilitaire indique en outre à quelle configuration du véhicule utilitaire elle s'applique et/ou à laquelle elle ne s'applique pas.

10. Système comportant :
- un dispositif (1) selon l'une quelconque des revendications précédentes, et
- un moyen (2) destiné à être placé sur ou au moins à proximité d'une infrastructure routière (B) et de préférence destiné à alerter sur et/ou à communiquer une restriction de conduite au moins potentiellement créée par l'infrastructure routière (B), comprenant :
- une unité fonctionnelle destinée à stocker et/ou à traiter au moins une information (RI) pertinente pour le véhicule utilitaire et concernant l'infrastructure routière (B), et
- une unité d'émission destinée à émettre ladite au moins une information (RI) pertinente pour le véhicule utilitaire vers un ou plusieurs véhicules utilitaires (N).

11. Système selon la revendication 10, dans lequel ladite au moins une information (RI) pertinente pour le véhicule utilitaire comprend une proposition d'itinéraire permettant le contournement de l'infrastructure routière (B).

12. Système selon la revendication 10 ou 11, dans lequel ladite au moins une information (RI) pertinente pour le véhicule utilitaire comprend une restriction de conduite potentielle pour un véhicule utilitaire (N), de préférence le type et/ou la position d'une restriction de conduite.

13. Système (1) selon l'une quelconque des revendications 10 à 12, dans lequel la restriction de conduite potentielle comprend au moins l'une des suivantes :
- une hauteur de passage maximale autorisée d'un tunnel ou d'un pont,
- une largeur de passage maximale autorisée dans une rue ou un chantier routier,
- une restriction de circulation pour le transport de substances dangereuses ou le transport en transit,
- une interdiction de circulation liée au temps,
- une restriction de circulation liée aux gaz d'échappement,
- une voie sans issue sans possibilité pour le véhicule utilitaire de faire demi-tour,
- une masse totale maximale autorisée ou une masse effective du véhicule sur un tronçon de route.

14. Système selon l'une quelconque des revendications 10 à 13, dans lequel le moyen (2) comprend une unité de réception destinée à recevoir une instruction de commande, au moins une information (RI) pertinente pour le véhicule utilitaire et concernant l'infrastructure routière (B) et/ou une actualisation de celle-ci.

15. Système selon l'une quelconque des revendications 10 à 14, dans lequel l'unité d'émission est conçue pour émettre en continu, de préférence à une fréquence définie.

16. Véhicule utilitaire (N), de préférence un poids lourd ou un omnibus, comportant un dispositif (1) selon l'une quelconque des revendications 1 à 9.
